# EUROPÄISCHE PATENTSCHRIFT

(11) **EP 3 974 374 B1**
(45) Veröffentlichungstag und Bekanntmachung des Hinweises auf die Patenterteilung: **11.01.2023**
(21) Anmeldenummer: 20198851.6
(22) Anmeldetag: 29.09.2020
(51) Int. Cl.: B67D 7/02, B67D 7/52, B67D 7/48

(54) **ZAPFPISTOLE MIT SCHALTER ZWISCHEN ZWEI MAXIMALEN DURCHFLUSSRATEN**
DISPENSING NOZZLE PISTOL WITH SWITCH BETWEEN TWO MAXIMUM FLOW RATES
BUSE DE DISTRIBUTION AVEC INTERRUPTEUR ENTRE DEUX DÉBITS MAXIMAUX

(43) Veröffentlichungstag der Anmeldung: 30.03.2022
(73) Patentinhaber: ELAFLEX HIBY GmbH & Co. KG, 22525 Hamburg (DE)
(72) Erfinder: KUNTER, Stefan, 22085 Hamburg (DE); VIETS, Sebastian, 21647 Moisburg (DE)
(74) Vertreter: Glawe, Delfs, Moll

(56) Entgegenhaltungen:
- EP-A1- 2 733 113
- EP-A1- 3 369 700
- WO-A1-2017/024209

## Beschreibung

Gegenstand der vorliegenden Erfindung ist ein Zapfventil zur Abgabe eines Fluids in einen Tank eines Kraftfahrzeugs. Das Zapfventil umfasst einen Kanal zur Durchleitung des Fluids sowie ein im Kanal angeordnetes Hauptventil, das zur Steuerung eines Fluiddurchflusses durch das Zapfventil zwischen einer Schließstellung und einer Öffnungsstellung bewegbar ist. Das Zapfventil weist weiterhin einen ersten einstellbaren maximalen Volumenstrom und einen zweiten einstellbaren maximalen Volumenstrom auf, wobei der zweite maximale Volumenstrom größer ist als der erste maximale Volumenstrom.

Ein solches Zapfventil ist aus der EP 3 369 700 A1 bekannt. Es dient beispielsweise dazu, den Tank eines Fahrzeugs mit einer wässrigen Harnstofflösung (auch bekannt unter dem Namen Ad-Blue) zu befüllen. Diese Harnstofflösung ist für viele neu zugelassene Diesel-Kraftfahrzeuge aufgrund von strengen Abgasnormen erforderlich, um beim Verbrennungsprozess entstehende Stickoxidemissionen, zu senken. Indem durch Wechselwirkung der Sensoreinrichtung mit einem Signalelement des Tanks wahlweise der erste oder zweite maximale Volumenstrom einstellbar ist, kann der maximale Volumenstrom an den zu befüllenden Tank angepasst werden. Insbesondere kann vorgesehen sein, dass bei einem großen Tank, beispielsweise ausgelegt nach ISO 22241-4, mit entsprechend großer Aufnahmefähigkeit der größere zweite maximale Volumenstrom eingestellt wird, so dass trotz der Größe des Tanks eine schnelle Befüllung stattfinden kann. Bei einem kleinen Tank, beispielsweise ausgelegt nach ISO 22241-5, bei dem zu große Volumenströme zu Störungen oder Unterbrechungen der Fluidabgabe führen könnten, kann vorgesehen sein, dass der kleinere erste maximale Volumenstrom eingestellt wird, so dass Störungen oder Unterbrechungen sicher vermieden werden.

Zur Einstellung des ersten oder zweiten maximalen Volumenstroms wurde in der EP 3 369 700 A1 vorgeschlagen, den ersten und zweiten maximalen Volumenstrom mit Hilfe einer Begrenzung der maximalen Öffnungsstellung des Hauptventils zu realisieren, wobei eine Wechselwirkung zwischen einem Signalelement des Tanks und dem Hauptventil über eine automatische Abschalteinrichtung des Zapfventils erfolgt. Diese Lösung ermöglicht zwar eine zuverlässige und sichere Einstellbarkeit des ersten und zweiten maximalen Volumenstroms, allerdings ist die Lösung konstruktiv aufwändig, da ein Eingriff in die automatische Abschalteinrichtung des Zapfventils notwendig ist.

Vor diesem Hintergrund ist es die Aufgabe der vorliegenden Erfindung, ein Zapfventil mit einem ersten und zweiten maximalen Volumenstrom bereitzustellen, welches konstruktiv einfacher ist. Gelöst wird diese Aufgabe mit den Merkmalen der unabhängigen Ansprüche. Vorteilhafte Ausführungsformen sind in den Unteransprüchen beschrieben.

Erfindungsgemäß weist das Zapfventil einen separat vom Hauptventil ausgebildeten einstellbaren Strömungsbegrenzer auf, welcher dazu ausgebildet ist, den Fluiddurchfluss durch das Zapfventil wahlweise auf den ersten oder zweiten maximalen Volumenstrom zu begrenzen. Weiterhin umfasst das Zapfventil eine Betätigungseinrichtung, die zur Wechselwirkung mit einem dem Tank des Kraftfahrzeugs zugeordneten Signalelement sowie zur wahlweisen Einstellung des Strömungsbegrenzers auf den ersten oder den zweiten maximalen Volumenstrom ausgebildet ist.

Zunächst werden einige im Rahmen der Erfindung verwendete Begriffe erläutert.

Ein Zapfventil ist eine Vorrichtung zur Kontrolle des Flüssigkeitsdurchflusses während eines Betankungsvorgangs. Die Anforderungen an die Bau- und Arbeitsweise von automatischen Zapfventilen für die Benutzung an Zapfsäulen sind in der DIN EN 13012 geregelt.

Mittels des Hauptventils steuert der Benutzer die Flüssigkeitsabgabe. Zur Betätigung des Hauptventils dient in der Regel ein Schalthebel. Die Flüssigkeit wird üblicherweise durch ein Auslaufrohr in den zu befüllenden Behälter geleitet.

Das Zapfventil weist einen einstellbaren Strömungsbegrenzer auf, welcher dazu ausgebildet ist, den Fluiddurchfluss wahlweise auf den ersten oder den zweiten maximalen Volumenstrom zu begrenzen. Dies bedeutet, dass durch den Strömungsbegrenzer bei vorgegebenem konstanten Fluiddruck am Eingang des Zapfventils jeweils höchstens der jeweils eingestellte maximale Volumenstrom hindurchtreten kann. Insbesondere kann der Benutzer mittels eines Schalthebels sowie des damit gekoppelten Hauptventils den Volumenstrom jeweils nur bis zu dem jeweils eingestellten ersten oder zweiten maximalen Volumenstrom steuern. Der jeweils eingestellte maximale Volumenstrom begrenzt somit die maximale Flüssigkeitsabgabe pro Zeiteinheit. Der zweite maximale Volumenstrom ist höher als der erste maximale Volumenstrom. Die Erfindung ist nicht auf ein Zapfventil mit genau zwei einstellbaren maximalen Volumenströmen beschränkt, sie umfasst auch Ausführungsformen, bei denen der Strömungsbegrenzer auf drei oder mehr einstellbare maximale Volumenströme einstellbar ist. Der einstellbare Strömungsbegrenzer ist separat vom Hauptventil ausgebildet. Dies bedeutet, dass der Strömungsbegrenzer unabhängig vom Zustand des Hauptventils auf den ersten oder zweiten maximalen Volumenstrom einstellbar ist. Der Strömungsbegrenzer kann vom Hauptventil beabstandet stromaufwärts oder stromabwärts des Hauptventils angeordnet sein.

Indem der erfindungsgemäße einstellbare Strömungsbegrenzer separat vom Hauptventil ausgebildet ist, erfolgt die wahlweise Begrenzung des Fluiddurchflusses unabhängig vom Hauptventil und dessen Abschaltautomatik. Es sind daher keine aufwändigen Modifikationen an der Abschaltautomatik und/oder am Hauptventil erforderlich, wodurch die Konstruktion des Zapfventils vereinfacht und die Funktionssicherheit erhöht werden kann. Die Anordnung eines Strömungsbegrenzers separat vom Hauptventil ermöglicht außerdem bei Fehlfunktionen eine deutlich einfachere Reparatur. Der Strömungsbegrenzer kann ggf. außerdem dazu ausgebildet sein, bei bereits bestehenden Zapfventilen nachgerüstet zu werden.

In einer Ausführungsform ist der Strömungsbegrenzer stromabwärts des Hauptventils angeordnet. Vorzugsweise ist der Strömungsbegrenzer in einem Auslaufrohr des Zapfventils angeordnet. Durch die Anordnung des Strömungsbegrenzers im Auslaufrohr kann das Auslaufrohr als eigenständige Einheit ausgetauscht werden, so dass bei Fehlfunktionen eine einfache Reparatur stattfinden kann. Zudem ist es möglich, Zapfventile durch einen Austausch des Auslaufrohres mit dem erfindungsgemäßen Strömungsbegrenzer nachzurüsten. Gegenstand der Erfindung ist insoweit auch ein Auslaufrohr für ein erfindungsgemäßes Zapfventil, wobei das Auslaufrohr einen einstellbaren Strömungsbegrenzer aufweist, der dazu ausgebildet ist, den Fluiddurchfluss wahlweise auf den ersten oder zweiten maximalen Volumenstrom zu begrenzen, wobei das Auslaufrohr weiterhin eine Betätigungseinrichtung aufweist, die zur Wechselwirkung mit einem dem Tank des Kraftfahrzeugs zugeordneten Signalelement sowie zur wahlweisen Einstellung des Strömungsbegrenzers auf den ersten oder den zweiten maximalen Volumenstrom ausgebildet ist. Der erfindungsgemäße Strömungsbegrenzer kann durch weitere vorliegend in Verbindung mit dem erfindungsgemäßen Zapfventil beschriebene Merkmale fortgebildet werden.

Der erste einstellbare maximale Volumenstrom kann weniger als 15 l/min betragen, vorzugsweise liegt er zwischen 5 l/min und 15 l/min, weiter vorzugsweise zwischen 5 l/min und 10 l/min. Zusätzlich oder alternativ kann der zweite einstellbare maximale Volumenstrom weniger als 50 l/min betragen, vorzugsweise liegt er zwischen 10 l/min und 50 l/min, weiter vorzugsweise zwischen 20 l/min und 40 l/min.

Vorzugsweise ist der Strömungsbegrenzer standardmäßig auf den ersten einstellbaren maximalen Volumenstrom eingestellt, wobei der zweite einstellbare maximale Volumenstrom nur dann eingestellt wird, wenn die Betätigungseinrichtung das Signalelement detektiert. Die Detektion des Signalelements kann dabei insbesondere durch die Wechselwirkung zwischen der Betätigungseinrichtung und dem Signalelement erfolgen. Indem standardmäßig der kleinere erste maximale Volumenstrom eingestellt ist, erfolgt standardmäßig die Abgabe des kleineren Volumenstroms, wobei größere Volumenströme nur dann ausgebracht werden, wenn durch die Erkennung des entsprechenden Signalelements sichergestellt ist, dass der zu betankende Tank aufgrund seiner Größe auch für den größeren zweiten maximalen Volumenstrom geeignet ist.

In einer bevorzugten Ausführungsform ist die Betätigungseinrichtung zur Wechselwirkung mit einem Ringmagneten eines Einfüllstutzens nach ISO 22241-4 ausgebildet. Das Signalelement kann in diesem Fall also einen Ringmagneten eines Einfüllstutzens nach ISO 22241-4 umfassen.

Die Betätigung des Strömungsbegrenzers zur wahlweisen Einstellung des ersten oder zweiten maximalen Volumenstroms kann magnetisch und/oder mechanisch (beispielsweise mittels Federelementen) und/oder pneumatisch (beispielsweise mittels Druckluft) und/oder elektrisch (beispielsweise mittels eines Stellmotors) erfolgen. In einer bevorzugten Ausführungsform weist die Betätigungseinrichtung ein verschiebbar angeordnetes Magnetelement auf, das zur mechanischen Betätigung des Strömungsbegrenzers ausgestaltet ist. Eine zwischen dem Magnetelement und dem Ringmagnet erzeugte Magnetkraft kann mechanisch auf den Strömungsbegrenzer übertragen werden, um diesen zu betätigen. Insbesondere kann das Magnetelement durch eine mechanische Signalübertragungsvorrichtung, beispielsweise durch eine Übertragungsstange, mit dem Strömungsbegrenzer verbunden sein.

Der Strömungsbegrenzer kann einen Ventilkörper aufweisen, wobei vorzugweise die mechanische Signalübertragungsvorrichtung bzw. die Übertragungsstange mit dem Ventilkörper verbunden ist. Die Magnetkraft kann über die Übertragungsstange auf den Ventilkörper übertragen werden, um den Strömungsbegrenzer zu öffnen bzw. zu schließen. Der Ventilkörper ist dabei vorzugsweise bei einer Betätigung des Strömungsbegrenzers durch die Signalübertragungsvorrichtung in eine erste Richtung bewegbar. Vorzugsweise ist weiterhin ein mit dem Ventilkörper verbundenes Rückstellelement vorgesehen, das insbesondere dazu ausgebildet sein kann, den Ventilkörper in eine der ersten Richtung entgegengesetzte Richtung zu drängen.

Der Strömungsbegrenzer kann zudem einen Ventilsitz aufweisen, wobei der Ventilkörper vorzugsweise stromabwärts in eine Schließstellung bewegbar ist, in der er gegen den Ventilsitz anliegt. Der Strömungsbegrenzer kann in dieser Ausführungsform auch als Drosselventil aufgefasst werden. Vorzugsweise ist vorgesehen, dass der Ventilkörper zur wahlweisen Begrenzung des Fluiddurchflusses auf den ersten maximalen Volumenstrom in die Schließstellung und zur wahlweisen Begrenzung des Fluiddurchflusses auf den zweiten maximalen Volumenstrom in eine

Öffnungsstellung bewegbar ist. Die Bewegung in die Öffnungsstellung kann durch die Übertragung der Magnetkraft mittels der Signalübertragungsvorrichtung auf den Ventilkörper erfolgen. Die Bewegung des Ventilkörpers in die Schließstellung kann beispielsweise durch das Rückstellelement erfolgen oder durch dieses unterstützt werden. Alternativ oder zusätzlich kann die Bewegung des Ventilkörpers in die Schließstellung auch dadurch erreicht werden, dass der Ventilkörper, wenn das Zapfventil in einen Einfüllstutzen ohne Ringmagnet eingeführt ist, vom Fluiddruck in die Schließstellung gedrückt wird.

Insbesondere kann die oben erwähnte standardmäßige Einstellung des Strömungsbegrenzers auf den ersten maximalen Volumenstrom durch die durch das Rückstellelement oder durch den Fluiddruck erzeugte Bewegung des Ventilkörpers in die Schließstellung erreicht werden. Sofern das Zapfventil in einen Einfüllstutzen eingeführt wird, welcher einen Ringmagneten aufweist, wirkt zwischen dem Ringmagneten und dem Magnetelement eine Magnetkraft. In der vorliegend beschriebene bevorzugten Ausführungsform ist die zwischen Ringmagnet und Magnetelement wirkende Magnetkraft dazu ausgestaltet, den Ventilkörper gegen eine vom Fluiddruck sowie vom ggf. vorhandenen Rückstellelement erzeugte Schließkraft in die Öffnungsstellung zu bringen und dort auch gegen die vom Fluiddruck erzeugten Schließkräfte zu halten.

Vorzugsweise ist stromaufwärts des Ventilkörpers eine Strömungsleiteinrichtung angeordnet, welche dazu eingerichtet ist, eine vom strömenden Fluid auf den Ventilkörper ausgeübte Schließkraft zu reduzieren. Die Strömungsleiteinrichtung kann dazu insbesondere Leitflächen aufweisen, welche relativ zu einer Axialrichtung des Ventilkörpers geneigt sind. Die Leitflächen können weiterhin dazu ausgebildet sein, den Fluidstrom von einer stromaufwärts weisenden Rückfläche des Ventilkörpers in Radialrichtung (also senkrecht zur Axialrichtung des Ventilkörpers) abzuleiten, so dass vorzugsweise zumindest ein Teil des Fluidstroms an der Rückfläche vorbeigeleitet wird. Beispielsweise kann vorgesehen sein, dass die Leitflächen dazu eingerichtet sind, den Fluidstrom von einer zentral durch den Ventilkörper verlaufenden Achse radial nach außen abzuleiten. Dadurch kann für eine seitliche Anströmung des Ventilkörpers gesorgt werden, wodurch die vom Fluid erzeugten Schließkräfte vermindert werden.

Eine Bewegbarkeit des Ventilkörpers kann in Richtung stromaufwärts durch einen Anschlag begrenzt sein. Durch die Begrenzung der Bewegbarkeit des Ventilkörpers nimmt dieser in der Öffnungsstellung eine definierte Position ein.

Vorzugsweise ist ein den Strömungsbegrenzer überbrückender Bypasskanal vorgesehen. Aufgrund des Bypasskanals verhindert der Strömungsbegrenzer den Fluiddurchfluss durch das Zapfventil nicht vollständig, sondern bewirkt lediglich eine Verringerung des Fluiddurchflusses. Vorzugsweise ist der Bypasskanal bei geschlossenem Strömungsbegrenzer zum Durchlassen des ersten maximalen Volumenstroms ausgebildet. Der Bypasskanal kann eine sich durch den Ventilkörper erstreckende Durchgangsöffnung für den Fluiddurchfluss aufweisen. Alternativ oder zusätzlich kann der Bypasskanal auch einen vom Strömungsbegrenzer beabstandeten Nebenarm aufweisen, welcher parallel zu einem durch den geöffneten Strömungsbegrenzer hindurchführenden Fluidstrom verläuft.

Das Zapfventil kann ein stromabwärts des Strömungsbegrenzers angeordnetes Sicherheitsventil aufweisen, das stromab durch ein Rückstellelement in eine Schließstellung gedrängt wird, wobei das Sicherheitsventil durch Wechselwirkung mit einem Einfüllstutzen des Tanks in eine Öffnungsstellung bewegbar ist. Ein solches Sicherheitsventil ist beispielsweise aus der EP 2 733 113 A1 bekannt. Vorzugsweise weist das Zapfventil außerdem eine automatische Abschalteinrichtung auf, die bei vollem Tank den Tankvorgang automatisch unterbricht. Dazu kann eine Fühlerleitung vorgesehen sein, die sich bis zum Auslassende des Zapfventils erstreckt und mit der automatischen Abschalteinrichtung in pneumatischer Wirkverbindung steht. Details der Ausgestaltung einer solchen automatischen Abschaltvorrichtung finden sich beispielsweise in der EP 2 386 520 A1. Das Sicherheitsventil dient zudem als Tropfschutzventil, um beispielsweise bei geschlossenem Hauptventil das unerwünschte Austreten von Restmengen des Fluids zu verhindern.

Insbesondere kann vorgesehen sein, dass die Betätigungseinrichtung relativ zu einem Ventilschaft des Sicherheitsventils verschiebbar ausgebildet ist, wobei der Ventilschaft des Sicherheitsventils vorzugsweise einen Hohlraum aufweist, in dem das Magnetelement der Betätigungseinrichtung verschiebbar angeordnet ist. Es hat sich gezeigt, dass die Anordnung des Magnetelements innerhalb des Ventilschafts des Sicherheitsventils eine besonders platzsparende Konstruktion ermöglicht. Wenn die Betätigungseinrichtung eine Übertragungsstange aufweist, kann diese durch eine Durchgangsöffnung in einer Rückwand des Ventilschafts geführt sein.

Gegenstand der Erfindung ist weiterhin eine Anordnung aus einem erfindungsgemäßen Zapfventil und einer Fluidpumpe, welche zur Zuführung des Fluids an das Zapfventil angeschlossen ist. Das Zapfventil kann durch weitere im Rahmen der vorliegenden Beschreibung offenbarte Merkmale fortgebildet werden.

Nachfolgend wird eine bevorzugte Ausführungsform des erfindungsgemäßen Zapfventils unter Bezugnahme auf die beigefügten Figuren beispielhaft erläutert.

Es zeigen:
- Figur 1:: eine seitliche Schnittansicht eines erfindungsgemäßen Zapfventils in einem ersten Zustand;
- Figur 2:: ein erfindungsgemäßes Auslaufrohr des Zapfventils der Figur 1 in einer vergrößerten Ansicht;
- Figur 2a:: eine Schnittansicht entlang der in Figur 2 gezeigten Linie A-A;
- Figur 2b:: eine Schnittansicht entlang der in Figur 2 gezeigten Linie A-A zur Illustration einer weiteren Ausführungsform des erfindungsgemäßen Zapfventils, welches einen alternativen Strömungsbegrenzer aufweist;
- Figur 3:: das Zapfventil der Figur 1 in einem zweiten Zustand;
- Figur 4:: das Auslaufrohr des Zapfventils der Figur 3 in einer vergrößerten Ansicht;
- Figur 5:: das Zapfventil der Figur 1 in einem dritten Zustand;
- Figur 6:: das Auslaufrohr des Zapfventils der Figur 5 in einer vergrößerten Ansicht.

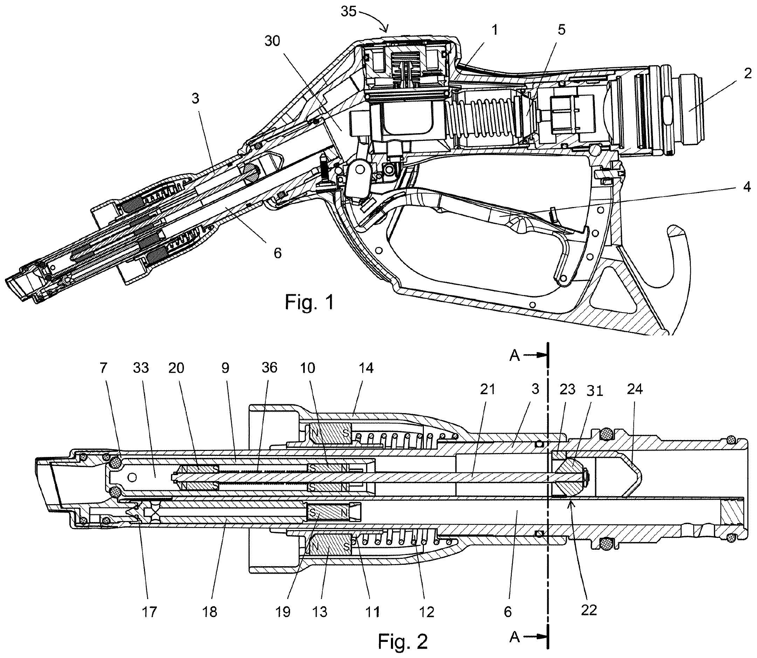

Figur 1 zeigt eine seitliche Schnittansicht eines erfindungsgemäßen Zapfventils. Das Zapfventil umfasst ein Gehäuse 1, in dem ein Kanal 30 zur Durchleitung eines Fluids gebildet ist. Über einen Einlass 2 kann ein Schlauch zur Zuführung des Fluids mit dem Zapfventil verbunden werden (nicht gezeigt). In dem Kanal 30 ist ein Hauptventil 5 angeordnet, welches über einen Schalthebel 4 betätigt werden kann. In Figur 1 befindet sich das Hauptventil 5 in der Schließstellung, in der der Fluiddurchfluss durch das Zapfventil gesperrt ist.

Mit dem Gehäuse 1 ist ein erfindungsgemäßes Auslaufrohr 3 verbunden. Das Auslaufrohr 3 kann zur Ausbringung des Fluids in einen Einfüllstutzen eines Tanks eingeführt werden. Das Zapfventil ist insbesondere dazu geeignet, eine wässrige Harnstofflösung in den Tank eines Fahrzeugs auszubringen.

Mit dem Hauptventil 5 steht eine automatische Abschalteinrichtung 35 in Wirkverbindung, über die das Hauptventil 5 unabhängig von der Stellung des Schalthebels 4 in die Schließstellung bewegt werden kann. Im Auslaufrohr 3 befindet sich zudem eine Fühlerleitung 6, die mit der Abschalteinrichtung 35 in pneumatischer Wirkverbindung steht. Wenn beim Ausbringen des Fluids der Fluidfüllstand das vordere Ende des Auslaufrohres erreicht und so die Fühlerleitung 6 abdeckt, führt eine damit einhergehende Druckänderung zu einem Auslösen der automatischen Abschalteinrichtung 35 und somit zu einem Schließen des Hauptventils 5. Die Funktionsweise der automatischen Abschalteinrichtung 35 ist grundsätzlich bekannt (siehe beispielsweise EP 2 386 520 A1) und soll hier nicht näher erläutert werden.

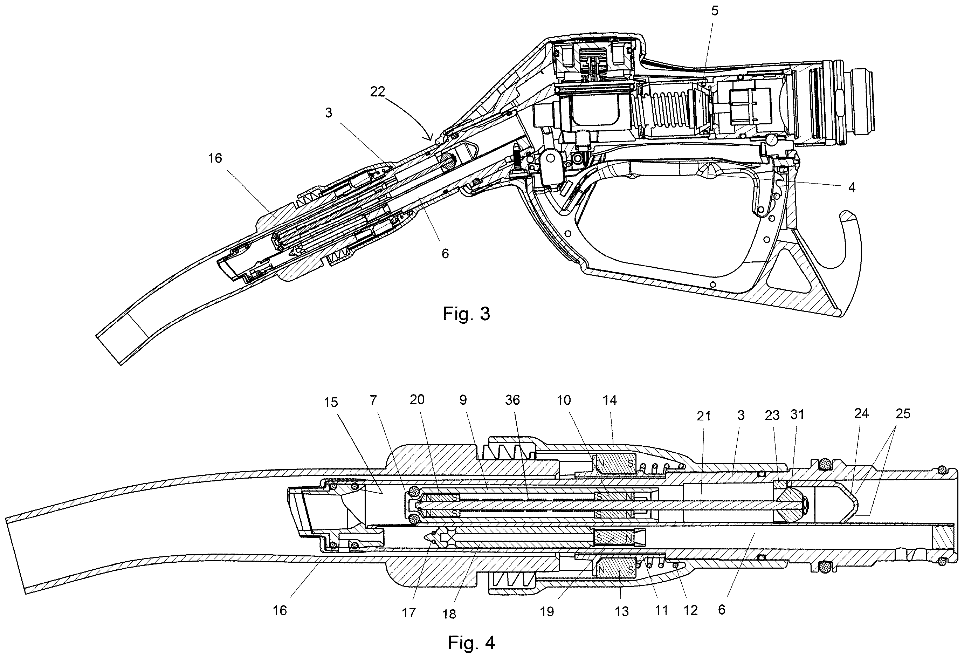

Im Bereich des Auslaufendes des Auslaufrohrs 3 ist weiterhin ein Sicherheitsventil 7 vorgesehen, das einen Ventilschaft 9 aufweist und das stromab gegen einen Ventilsitz 15 schließt (siehe Figur 4). Das stromauf weisende Ende des Ventilschaftes 9 ist mit einem Magneten 10 versehen.

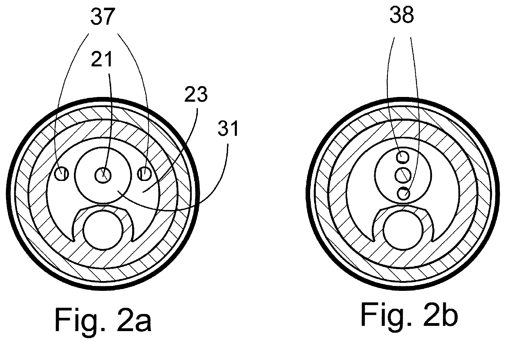

Das Auslaufrohr 3 weist außerdem eine entlang dessen Axialrichtung verschiebbare Hülse 11 auf, welche durch eine Feder 12 in die in Figur 1 gezeigte Sperrstellung vorgespannt ist. An der Hülse 11 ist ein ringförmiger Wirkmagnet 13 angeordnet, welcher den Ventilschaft 9 und das Sicherheitsventil 7 durch magnetische Wechselwirkung mit dem Magneten 10 in die in den Figuren 1 und 2 gezeigte Schließstellung drängt.

Die Fühlerleitung 6 weist ein am auslaufseitigen Ende angeordnetes Fühlerleitungsventil 17 mit einem Ventilschaft 18 auf, der mit seinem auslaufseitigen Ende gegen einen Ventilsitz schließt. Der Ventilschaft 18 umfasst am gegenüberliegenden Ende einen Betätigungsmagneten 19, der den Ventilschaft 18 durch Wechselwirkung mit dem Wirkmagneten 13 in der geschlossenen Stellung hält.

In dem in den Figuren 1 und 2 gezeigten Zustand ist der Kanal 30 durch das Sicherheitsventil 7 verschlossen. Außerdem ist die Fühlerleitung 6 durch das Fühlerleitungsventil 17 verschlossen. Wird in diesem Zustand das Hauptventil 5 mittels des Schalthebels 4 betätigt, so wird ein Ausbringen des Fluides verhindert, weil das Auslaufrohr durch das Sicherheitsventil 7 verschlossen ist.

In dem Auslaufrohr 3 befindet sich weiterhin ein einstellbarer Strömungsbegrenzer, welcher vorliegend durch ein Drosselventil 22 ausgebildet ist. Mit Hilfe des Drosselventils 22 kann ein Fluiddurchfluss durch das Zapfventil bzw. durch das Auslaufrohr 3 auf wahlweise einen ersten maximalen Volumenstrom oder einen zweiten maximalen Volumenstrom begrenzt werden. Das Drosselventil 22 weist einen Ventilkörper 31 auf, der mittels einer Übertragungsstange 21 mit einem Magnetelement 20 verbunden ist. Das Magnetelement 20 ist in einem Hohlraum 33 innerhalb des Ventilschafts 9 des Sicherheitsventils 7 angeordnet und ist relativ zum Ventilschaft 9 in Axialrichtung des Auslaufrohres 3 verschiebbar. Die Übertragungsstange 21 ist ebenfalls relativ zum Ventilschaft 9 verschiebbar und durch eine in einer stromaufwärts weisenden Rückwand des Ventilschafts 9 befindlichen Durchgangsöffnung durchgeführt.

Das Magnetelement 20 und die Übertragungsstange 21 bilden zusammen eine Betätigungseinrichtung für das Drosselventil 22. In dem in den Figuren 1 und 2 gezeigten Zustand befindet sich der Ventilkörper in einer Schließstellung, in der er stromabwärts gegen einen Ventilsitz 23 des Drosselventils 22 anliegt. Der Ventilkörper 31 wird durch ein Rückstellelement 36 relativ zum Ventilschaft 9 stromabwärts gedrängt und dadurch in den Ventilsitz 23 gespannt. Die Funktionsweise der Betätigungseinrichtung 20, 21 sowie die Einstellung des Drosselventils 22 auf den zweiten maximalen Volumenstrom wird in Verbindung mit den Figuren 3 bis 6 noch genauer erläutert.

Die Figuren 3 und 4 zeigen das Zapfventil der Figur 1 sowie dessen Auslaufrohr nach dem Einführen desselben in einen Einfüllstutzen 16 des Tanks. Im Unterschied zu den Figuren 1 und 2 wurde außerdem das Hauptventil 5 durch Betätigung des Schalthebels 4 in eine Öffnungsstellung bewegt. Beim Einfüllstutzen 16 handelt es sich vorliegend um den Einfüllstutzen eines Harnstoffstanks eines PKW nach ISO 22241-5 ohne Ringmagnet.

Der Einfüllstutzen 16 ist auf grundsätzlich bekannte Weise (siehe EP 3 369 700 A1) dazu ausgebildet, die Hülse 11 beim Einführen des Auslaufrohres 3 relativ zu dieser stromaufwärts von der in den Figuren 1 und 2 gezeigten Sperrstellung in eine Öffnungsstellung zu verschieben. Bei der Verschiebung der Hülse 11 bewegt sich der damit verbundene Wirkmagnet 13 ebenfalls relativ zum Auslaufrohr 3 stromaufwärts, wobei er durch magnetische Wechselwirkung den am Ventilschaft 9 fixierten Magneten 10 sowie den am Ventilschaft 18 fixierten Betätigungsmagneten 19 mitnimmt und so das Fühlerleitungsventil 17 sowie das Sicherheitsventil 7 öffnet.

Das Magnetelement 20 ist ausreichend weit vom Wirkmagneten 13 entfernt, so dass es durch die Verbschiebung des Wirkmagneten 13 nicht oder nur auf vernachlässigbare Weise beeinflusst wird. Da das Magnetelement 20, die Übertragungsstange 21 und der damit verbundene Ventilkörper 31 relativ zum Ventilschaft 9 beweglich sind und vom Rückstellelement 36 in die Schließstellung gedrängt werden, verbleibt der Ventilkörper 31 in der Schließstellung. In dem Ventilsitz 23 befinden sich Durchgangslöcher 37, welche in der Schnittansicht der Figur 2a illustriert sind. Durch die Durchgangslöcher 37 kann auch in der Schließstellung des Ventilkörpers 31 ein gewisser Volumenstrom durch das Auslaufrohr 3 hindurchtreten. Dieser gewisse Volumenstrom ist höchstens so groß wie der erste maximale Volumenstrom des Drosselventils, welcher vorliegend 9 l/min beträgt. Der durch die Öffnung des Hauptventils 5 hindurchtretende Volumenstrom wird daher durch das geschlossene Drosselventil 22 auf den ersten maximalen Volumenstrom des Zapfventils begrenzt. Zusätzlich oder alternativ zu den im Ventilsitz 23 befindlichen Durchgangslöchern 37 können in einer alternativen Ausführungsform auch Durchgangslöcher 38 im Ventilkörper 31 vorgesehen sein. Dies ist beispielhaft in der Figur 2b illustriert, welche eine der Figur 2a entsprechende Schnittansicht zeigt.

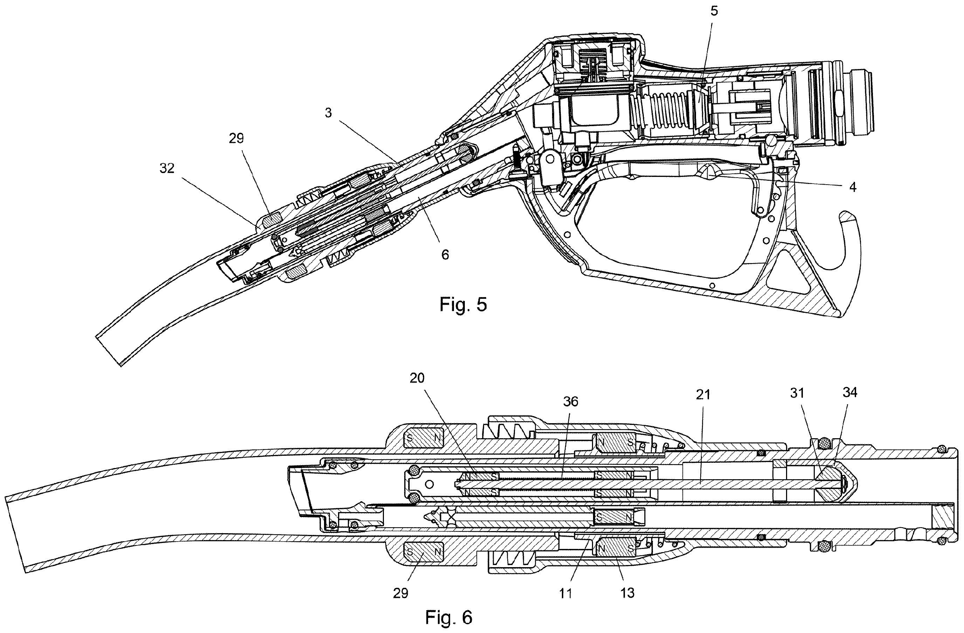

Die Figuren 5 und 6 zeigen das Zapfventil der Figur 1 sowie dessen Auslaufrohr nach dem Einführen desselben in einen Einfüllstutzen 32, bei dem es sich im Unterschied zum Einfüllstutzen 16 der Figuren 3 und 4 um den Einfüllstutzen eines Harnstoffstanks eines PKW nach ISO 22241-4 mit Ringmagnet 29 handelt. Ebenso wie in den Figuren 3 und 4 befindet sich das Hauptventil 5 in einer Öffnungsstellung.

Beim Einführen des Auslaufrohrs wird die Hülse 11, wie bereits in Verbindung mit den Figuren 3 und 4 beschrieben, durch den Einfüllstutzen 32 relativ zum Auslaufrohr 3 verschoben, so dass durch die Wechselwirkung zwischen dem Wirkmagneten 13 und den Magneten 10 und 19 sowohl das Fühlerleitungsventil 17 als auch das Sicherheitsventil 7 geöffnet wird.

Außerdem kommt es vorliegend zu einer Wechselwirkung zwischen dem Ringmagneten 29 und dem Magnetelement 20. Insbesondere sind Ringmagnet 29 und Magnetelement 20 so angeordnet, dass sich beim Einführen des Auslaufrohres 3 in den Einfüllstutzen 32 zunächst gleichnamige Pole gegenüberstehen und so eine Abstoßende Kraft auf das Magnetelement 20 ausgeübt wird. Das Magnetelement 20 ist dabei so ausgestaltet, dass die Magnetkraft die entgegenwirkende Rückstellkraft des Rückstellelements 36 übersteigt. Die abstoßende Kraft führt daher zu einer Verschiebung des Magnetelements 20 in Richtung stromaufwärts relativ zum Auslaufrohr 3. Aufgrund der durch die Übertragungsstange 21 gebildeten Verbindung des Magnetelements 20 mit dem Ventilkörper 31 wird der Ventilkörper entgegen der Rückstellkraft des Rückstellelements 36 in eine Öffnungsstellung bewegt. Die Bewegung des Ventilkörpers 31 wird stromaufwärts durch einen Anschlag 34 begrenzt.

In der Öffnungsstellung des Drosselventils 22 kann bei vorgegebenem Fluiddruck am Eingang des Zapfventils ein größerer Volumenstrom durch das Auslaufrohr hindurchtreten als in der in den Figuren 3 und 4 gezeigten Schließstellung. Insbesondere ist das Drosselventil 22 in dem gezeigten Zustand bei ausreichender Öffnung des Hauptventils 5 dazu ausgestaltet, den zweiten maximalen Volumenstrom durch das Auslaufrohr 3 hindurchzulassen, welcher vorliegend etwa 20 l/min beträgt. Die zwischen dem Ringmagneten 29 und dem Magnetelement 20 wirkende Magnetkraft ist so groß, dass der Ventilkörper 31 gegen den Fluiddruck sowie gegen die Rückstellkraft des Rückstellelements 36 in der Öffnungsstellung gehalten wird. Um die vom strömenden Fluid auf den Ventilkörper 31 ausgeübte Kraft zu reduzieren, ist eine Strömungsleieinrichtung 24 vorgesehen, welche in der gezeigten Ausführungsform einstückig mit dem Anschlag 34 ausgebildet ist. In alternativen Ausführungsformen können der Anschlag 34 und die Strömungsleiteinrichtung 24 auch durch separate Elemente gebildet sein.

Die Strömungsleiteinrichtung 24 weist relativ zur Axialrichtung des Ventilkörpers 31 geneigte Leitflächen 25 auf, welche dazu ausgebildet sind, das Fluid von einer zentral durch den Ventilkörper 31 verlaufenden Achse (welche vorliegend mit der Längsachse der Übertragungsstange 21 übereinstimmt) nach außen abzuleiten. Die Leitflächen 25 weisen in den Figuren nicht erkennbare Durchgangsöffnungen für das Fluid auf, welche von der zentral durch Ventilkörper verlaufenden Achse aus betrachtet radial außen angeordnet sind. Der Fluidstrom wird durch die Strömungsleiteinrichtung 24 innerhalb des Kanals 30 nach außen abgeleitet, so dass auf die zentral Rückfläche des Ventilkörpers 31 lediglich ein verminderter dynamischer Druck bzw. Staudruck wirkt. Die vom Fluid auf den Ventilkörper 31 ausgeübte Schließkraft wird dadurch reduziert.

## Patentansprüche

1. Zapfventil zur Abgabe eines Fluids in einen Tank eines Kraftfahrzeugs, umfassend die nachfolgenden Merkmale:
- das Zapfventil weist einen Kanal (30) zur Durchleitung des Fluids auf, wobei im Kanal (30) ein Hauptventil (5) angeordnet ist, das zur Steuerung eines Fluiddurchflusses zwischen einer Schließstellung und einer Öffnungsstellung bewegbar ist,
- das Zapfventil weist einen ersten maximalen Volumenstrom und einen zweiten maximalen Volumenstrom auf, wobei der zweite maximale Volumenstrom größer ist als der erste,
**gekennzeichnet durch** die Merkmale:
- das Zapfventil weist einen separat vom Hauptventil (5) ausgebildeten einstellbaren Strömungsbegrenzer (22) auf, welcher dazu ausgebildet ist, den Fluiddurchfluss wahlweise auf den ersten oder zweiten maximalen Volumenstrom zu begrenzen,
- das Zapfventil weist eine Betätigungseinrichtung (20, 21) auf, die zur Wechselwirkung mit einem dem Tank des Kraftfahrzeugs zugeordneten Signalelement (29) sowie zur wahlweisen Einstellung des Strömungsbegrenzers (22) auf den ersten oder den zweiten maximalen Volumenstrom ausgebildet ist.

2. Zapfventil nach Anspruch 1, bei dem der Strömungsbegrenzer (22) stromabwärts des Hauptventils und vorzugsweise in einem Auslaufrohr (3) des Zapfventils angeordnet ist.

3. Zapfventil nach Anspruch 1 oder 2, bei dem der erste einstellbare maximale Volumenstrom weniger als 15 l/min, vorzugsweise 5 bis 15 l/min, weiter vorzugsweise 5 bis 10 l/min beträgt, und/oder bei dem der zweite einstellbare maximale Volumenstrom weniger als 50 l/min, vorzugsweise 10 bis 50 l/min und weiter vorzugsweise 20 bis 40 l/min beträgt.

4. Zapfventil nach einem der Ansprüche 1 bis 3, bei dem der Strömungsbegrenzer (22) standardmäßig auf den ersten einstellbaren maximalen Volumenstrom eingestellt ist, wobei der zweite einstellbare maximale Volumenstrom nur dann eingestellt wird, wenn die Betätigungseinrichtung (20, 21) das Signalelement (29) detektiert.

5. Zapfventil nach einem der Ansprüche 1 bis 4, bei dem die Betätigungseinrichtung zur Wechselwirkung mit einem Ringmagneten (29) eines Einfüllstutzens nach ISO 22241-4 ausgebildet ist.

6. Zapfventil nach einem der Ansprüche 1 bis 5, bei dem die Betätigungseinrichtung ein verschiebbar angeordnetes Magnetelement (20) aufweist, das zur mechanischen Betätigung des Strömungsbegrenzers (22) ausgestaltet ist.

7. Zapfventil nach Anspruch 6, bei dem das Magnetelement (20) durch eine mechanische Signalübertragungsvorrichtung (21) mit einem Ventilkörper (31) des Strömungsbegrenzers (22) verbunden ist, wobei der Ventilkörper (31) bei einer Betätigung des Strömungsbegrenzers (22) durch die Signalübertragungsvorrichtung (21) in eine erste Richtung bewegbar ist, wobei vorzugsweise ein mit dem Ventilkörper (31) verbundenes Rückstellelement (36) vorgesehen ist, das weiter vorzugsweise dazu ausgebildet ist, den Ventilkörper (31) in eine der ersten Richtung entgegengesetzte Richtung zu drängen.

8. Zapfventil nach Anspruch 7, bei dem der Strömungsbegrenzer (22) einen Ventilsitz (23) aufweist, wobei der Ventilkörper (31) vorzugsweise stromabwärts in eine Schließstellung bewegbar ist, in der er gegen den Ventilsitz (23) anliegt, wobei der Ventilkörper (31) weiter vorzugsweise vom Rückstellelement (36) in die Schließstellung gedrängt wird.

9. Zapfventil gemäß Anspruch 8, bei dem der Ventilkörper (31) zur wahlweisen Begrenzung des Fluiddurchflusses auf den ersten maximalen Volumenstrom in die Schließstellung und zur wahlweisen Begrenzung des Fluiddurchflusses auf den zweiten maximalen Volumenstrom in eine Öffnungsstellung bewegbar ist.

10. Zapfventil nach einem der Ansprüche 7 bis 9, bei dem stromaufwärts des Ventilkörpers (31) ein Anschlag (34) zur Begrenzung der Bewegbarkeit des Ventilkörpers (31) angeordnet ist.

11. Zapfventil nach einem der Ansprüche 7 bis 10, bei dem stromaufwärts des Ventilkörpers (31) eine Strömungsleiteinrichtung (24) angeordnet ist, welche dazu eingerichtet ist, eine vom strömenden Fluid auf den Ventilkörper (31) ausgeübte Schließkraft zu reduzieren.

12. Zapfventil nach einem der Ansprüche 1 bis 11, bei dem ein den Strömungsbegrenzer (22) überbrückender Bypasskanal vorgesehen ist, welcher vorzugsweise bei geschlossenem Strömungsbegrenzer (22) zum Durchlassen des ersten maximalen Volumenstroms ausgebildet ist, wobei der Bypasskanal weiter vorzugsweise zumindest eine sich durch den Ventilkörper (31) erstreckende Durchgangsöffnung (38) und/oder zumindest eine sich durch den Ventilsitz (23) erstreckende Durchgangsöffnung (37) für den Fluiddurchfluss aufweist.

13. Zapfventil nach einem der Ansprüche 1 bis 12, welches ein stromabwärts des Strömungsbegrenzers (22) angeordnetes Sicherheitsventil (7) aufweist, das stromab durch ein Rückstellelement in eine Schließstellung gedrängt wird, wobei das Sicherheitsventil (7) durch Wechselwirkung mit einem Einfüllstutzen des Tanks in eine Öffnungsstellung bewegbar ist, wobei vorzugsweise die Betätigungseinrichtung (20, 21) relativ zu einem Ventilschaft (9) des Sicherheitsventils (7) verschiebbar ausgebildet ist, wobei der Ventilschaft (9) des Sicherheitsventils (7) vorzugsweise einen Hohlraum (33) aufweist, in dem das Magnetelement (20) verschiebbar gelagert ist.

14. Auslaufrohr für ein Zapfventil zur Abgabe eines Fluids in einen Tank eines Kraftfahrzeugs, umfassend die nachfolgenden Merkmale:
- das Auslaufrohr weist einen Kanal zur Durchleitung des Fluids auf,
- das Auslaufrohr weist einen ersten maximalen Volumenstrom und einen zweiten maximalen Volumenstrom auf, wobei der zweite maximale Volumenstrom größer ist als der erste,
**gekennzeichnet durch** die Merkmale:
- das Auslaufrohr umfasst einen einstellbaren Strömungsbegrenzer (22), welcher dazu ausgebildet ist, den Fluiddurchfluss wahlweise auf den ersten oder zweiten maximalen Volumenstrom zu begrenzen,
- das Auslaufrohr weist eine Betätigungseinrichtung (20, 21) auf, die zur Wechselwirkung mit einem dem Tank des Kraftfahrzeugs zugeordneten Signalelement (29) sowie zur wahlweisen Einstellung des Strömungsbegrenzers (22) auf den ersten oder den zweiten maximalen Volumenstrom ausgebildet ist.

15. Anordnung umfassend ein Zapfventil nach einem der Ansprüche 1 bis 13 und eine Fluidpumpe, welche zur Zuführung des Fluids an das Zapfventil angeschlossen ist.

## Claims

1. Filling nozzle for dispensing a fluid into a tank of a motor vehicle, comprising the following features:
- the filling nozzle has a channel (30) for passing-through of the fluid, wherein, in the channel (30), there is arranged a main valve (5) which, for controlling a fluid flow, is movable between a closed position and an open position,
- the filling nozzle has a first maximum volume flow and a second maximum volume flow, wherein the second maximum volume flow is greater than the first one,
**characterized by** the features:
- the filling nozzle has a settable flow limiter (22) which is formed separately from the main valve (5) and which is configured to limit the fluid flow to the first or second maximum volume flow in a selective manner,
- the filling nozzle has an actuating device (20, 21) which is configured for interaction with a signal element (29) assigned to the tank of the motor vehicle and for selective setting of the flow limiter (22) to the first or the second maximum volume flow.

2. Filling nozzle according to Claim 1, in which the flow limiter (22) is arranged downstream of the main valve and preferably in an outlet pipe (3) of the filling nozzle.

3. Filling nozzle according to Claim 1 or 2, in which the first settable maximum volume flow is less than 15 1/min, preferably 5 to 15 1/min, more preferably 5 to 10 1/min, and/or in which the second settable maximum volume flow is less than 50 1/min, preferably 10 to 50 1/min and more preferably 20 to 40 1/min.

4. Filling nozzle according to one of Claims 1 to 3, in which the flow limiter (22) is set by default to the first settable maximum volume flow, wherein the second settable maximum volume flow is set only if the actuating device (20, 21) detects the signal element (29).

5. Filling nozzle according to one of Claims 1 to 4, in which the actuating device is configured for interaction with an annular magnet (29) of a filler neck conforming to ISO 22241-4.

6. Filling nozzle according to one of Claims 1 to 5, in which the actuating device has a displaceably arranged magnet element (20) which is designed for mechanically actuating the flow limiter (22).

7. Filling nozzle according to Claim 6, in which the magnet element (20) is connected to a valve body (31) of the flow limiter (22) by a mechanical signal-transmission apparatus (21), wherein, upon actuation of the flow limiter (22), the valve body (31) is movable in a first direction by way of the signal-transmission apparatus (21), wherein preferably provision is made of a restoring element (36) connected to the valve body (31), which restoring element is furthermore preferably configured to force the valve body (31) in a direction which is opposite the first direction.

8. Filling nozzle according to Claim 7, in which the flow limiter (22) has a valve seat (23), wherein the valve body (31) is preferably movable downstream into a closed position in which it bears against the valve seat (23), wherein the valve body (31) is furthermore preferably forced into the closed position by the restoring element (36).

9. Filling nozzle according to Claim 8, in which the valve body (31) is movable into the closed position for selective limitation of the fluid flow to the first maximum volume flow and into an open position for selective limitation of the fluid flow to the second maximum volume flow.

10. Filling nozzle according to one of Claims 7 to 9, in which a stop (34) for limiting the mobility of the valve body (31) is arranged upstream of the valve body (31).

11. Filling nozzle according to one of Claims 7 to 10, in which a flow-directing device (24) is arranged upstream of the valve body (31) and is designed to reduce a closing force exerted by the flowing fluid on the valve body (31).

12. Filling nozzle according to one of Claims 1 to 11, in which provision is made of a bypass channel which bypasses the flow limiter (22) and which is preferably configured to allow passage of the first maximum volume flow when the flow limiter (22) is in a closed state, wherein the bypass channel furthermore preferably has at least one passage opening (38), extending through the valve body (31), and/or at least one passage opening (37), extending through the valve seat (23), for the fluid flow.

13. Filling nozzle according to one of Claims 1 to 12, having a safety valve (7) which is arranged downstream of the flow limiter (22) and which is forced downstream into a closed position by a restoring element, wherein the safety valve (7) is movable into an open position by way of interaction with a filler neck of the tank, wherein preferably the actuating device (20, 21) is configured so as to be displaceable relative to a valve shank (9) of the safety valve (7), wherein the valve shank (9) of the safety valve (7) preferably has a cavity (33) in which the magnet element (20) is displaceably mounted.

14. Outlet pipe for a filling nozzle for dispensing a fluid into a tank of a motor vehicle, comprising the following features:
- the outlet pipe has a channel for passing-through of the fluid,
- the outlet pipe has a first maximum volume flow and a second maximum volume flow, wherein the second maximum volume flow is greater than the first one,
**characterized by** the features:
- the outlet pipe comprises a settable flow limiter (22) which is configured to limit the fluid flow to the first or second maximum volume flow in a selective manner,
- the outlet pipe has an actuating device (20, 21) which is configured for interaction with a signal element (29) assigned to the tank of the motor vehicle and for selective setting of the flow limiter (22) to the first or the second maximum volume flow.

15. Arrangement comprising a filling nozzle according to one of Claims 1 to 13 and a fluid pump which, for supplying the fluid, is connected to the filling nozzle.

## Revendications

1. Soupape de distribution destinée à la distribution d'un fluide dans un réservoir d'un véhicule automobile, ladite soupape comprenant les éléments caractéristiques suivants :
- la soupape de distribution comporte un conduit (30) destiné à laisser passer le fluide, une soupape principale (5), qui peut être déplacée entre une position fermée et une position ouverte pour commander un passage de fluide, étant disposée dans le conduit (30),
- la soupape de distribution présente un premier débit volumétrique maximal et un deuxième débit volumétrique maximal, le deuxième débit volumétrique maximal étant supérieur au premier,
**caractérisée par** les éléments caractéristiques suivants:
- la soupape de distribution comporte un limiteur d'écoulement réglable (22) qui est conçu de manière séparée de la soupape principale (5) et qui est conçu pour limiter sélectivement le passage de fluide au premier ou deuxième débit volumétrique maximal,
- la soupape de distribution comporte un mécanisme d'actionnement (20, 21) qui est conçu pour coopérer avec un élément de signal (29) associé au réservoir du véhicule automobile et régler sélectivement le limiteur d'écoulement (22) au premier ou deuxième débit volumétrique maximal.

2. Soupape de distribution selon la revendication 1, dans laquelle le limiteur d'écoulement (22) est disposé en aval de la soupape principale et de préférence dans un tube de sortie (3) de la soupape de distribution.

3. Soupape de distribution selon la revendication 1 ou 2, dans laquelle le premier débit volumétrique maximal réglable est inférieur à 15 l/min, de préférence est de 5 à 15 l/min, plus préférablement est de 5 à 10 l/min, et/ou dans laquelle le deuxième débit volumétrique maximal réglable est inférieur à 50 l/min, de préférence est de 10 à 50 l/min et plus préférablement est de 20 à 40 l/min.

4. Soupape de distribution selon l'une des revendications 1 à 3, dans laquelle le limiteur d'écoulement (22) est réglé par défaut au premier débit volumétrique maximal réglable, le deuxième débit volumétrique maximal réglable n'étant réglé que lorsque le mécanisme d'actionnement (20, 21) détecte l'élément de signal (29).

5. Soupape de distribution selon l'une des revendications 1 à 4, dans laquelle le mécanisme d'actionnement est conçu pour coopérer avec un aimant annulaire (29) d'une tubulure de remplissage selon la norme ISO 22241-4.

6. Soupape de distribution selon l'une des revendications 1 à 5, dans laquelle le mécanisme d'actionnement comporte un élément magnétique (20) qui est disposé de manière coulissante et qui est conçu pour actionner mécaniquement le limiteur d'écoulement (22) .

7. Soupape de distribution selon la revendication 6, dans laquelle l'élément magnétique (20) est relié à un corps de soupape (31) du limiteur d'écoulement (22) par un dispositif de transmission de signal mécanique (21), le corps de soupape (31) pouvant être déplacé dans une première direction par le dispositif de transmission de signal (21) lorsque le limiteur d'écoulement (22) est actionné, un élément de rappel (36) relié au corps de soupape (31) étant de préférence prévu qui est en outre de préférence conçu pour pousser le corps de soupape (31) dans une direction opposée à la première direction.

8. Soupape de distribution selon la revendication 7, dans laquelle le limiteur d'écoulement (22) comporte un siège de soupape (23), le corps de soupape (31) étant de préférence déplaçable vers l'aval jusque dans une position fermée dans laquelle il vient en appui sur le siège de soupape (23), le corps de soupape (31) étant en outre de préférence poussé dans la position fermée par l'élément de rappel (36).

9. Soupape de distribution selon la revendication 8, dans laquelle le corps de soupape (31) est déplaçable vers la position fermée pour limiter sélectivement le passage de fluide au premier débit volumétrique maximum et vers une position ouverte pour limiter sélectivement le passage de fluide au deuxième débit volumétrique maximum.

10. Soupape de distribution selon l'une des revendications 7 à 9, dans laquelle une butée (34) de limitation de la mobilité du corps de soupape (31) est disposée en amont du corps de soupape (31).

11. Soupape de distribution selon l'une des revendications 7 à 10, dans laquelle un mécanisme de direction d'écoulement (24) est disposé en amont du corps de soupape (31) et est conçu pour réduire une force de fermeture exercée par le fluide qui s'écoule sur le corps de soupape (31).

12. Soupape de distribution selon l'une des revendications 1 à 11, dans laquelle un conduit de dérivation qui ponte le limiteur d'écoulement (22) est prévu qui est de préférence conçu pour laisser passer le premier débit volumétrique maximum lorsque le limiteur d'écoulement (22) est fermé, le conduit de dérivation comportant en outre de préférence au moins une ouverture de passage (38) qui s'étend à travers le corps de soupape (31) et/ou au moins une ouverture de passage (37) qui s'étend à travers le siège de soupape (23) pour laisser passer le fluide.

13. Soupape de distribution selon l'une des revendications 1 à 12, laquelle comporte une soupape de sécurité (7) qui est disposée en aval du limiteur d'écoulement (22) et qui est poussée dans une position fermée en aval par un élément de rappel, la soupape de sécurité (7) pouvant être déplacée dans une position ouverte par coopération avec une tubulure de remplissage du réservoir, le mécanisme d'actionnement (20, 21) étant de préférence conçu pour pouvoir coulisser par rapport à une tige de soupape (9) de la soupape de sécurité (7), la tige de soupape (9) de la soupape de sécurité (7) comportant de préférence une cavité (33) dans laquelle l'élément magnétique (20) est monté de manière coulissante.

14. Tube de sortie d'une soupape de distribution destinée à la distribution d'un fluide dans un réservoir d'un véhicule automobile, ledit tube de sortie comportant les éléments caractéristiques suivants :
- le tube de sortie comporte un conduit destiné à laisser passer le fluide,
- le tube de sortie présente un premier débit volumétrique maximal et un deuxième débit volumétrique maximal, le deuxième débit volumétrique maximal étant supérieur au premier,
**caractérisé par** les éléments caractéristiques suivants :
- le tube de sortie comprend un limiteur d'écoulement réglable (22) qui est conçu pour limiter le passage de fluide soit au premier soit au deuxième débit volumétrique maximal,
- le tube de sortie comporte un mécanisme d'actionnement (20, 21) qui est conçu pour coopérer avec un élément de signal (29) associé au réservoir du véhicule automobile et régler sélectivement le limiteur d'écoulement (22) au premier ou deuxième débit volumétrique maximal.

15. Ensemble comprenant une soupape de distribution selon l'une des revendications 1 à 13 et une pompe à fluide qui est raccordée à la soupape de distribution pour amener le fluide.
